# EUROPÄISCHE PATENTSCHRIFT

(11) **EP 1 208 670 B1**
(45) Veröffentlichungstag und Bekanntmachung des Hinweises auf die Patenterteilung: **29.10.2008**
(21) Anmeldenummer: 00969216.1
(22) Anmeldetag: 30.08.2000
(51) Int. Cl.: H04L 12/14, G07F 7/10

(54) **VERFAHREN ZUR PRÄVENTIVEN UND/ODER AKTUELLEN ANZEIGE VON ÜBERTRAGUNGSKOSTEN BEI DER DATENÜBERTRAGUNG VON INTERNET- UND ONLINEDATEN**
METHOD FOR EFFECTING THE PREVENTIVE AND/OR CURRENT DISPLAY OF TRANSMISSION COSTS DURING THE TRANSMISSION OF INTERNET AND ONLINE DATA
PROCEDE D'INDICATION PREVENTIVE ET/OU INSTANTANEE DE COUTS DE TRANSMISSION LORS DE LA TRANSMISSION DE DONNEES INTERNET ET EN LIGNE

(30) Priorität: 31.08.1999 DE 19941461
(43) Veröffentlichungstag der Anmeldung: 29.05.2002
(73) Patentinhaber: T-Mobile Deutschland GmbH, 53227 Bonn (DE)
(72) Erfinder: KELLER, Walter, 40880 Ratingen (DE)
(74) Vertreter: Riebling, Peter
(86) Internationale Anmeldenummer: PCT/DE2000/002969
(87) Internationale Veröffentlichungsnummer: WO 2001/017221

(56) Entgegenhaltungen:
- WO-A-97/22936
- WO-A-99/08436
- G. FANKHAUSER, B. STILLER: "Reservation-based Charging in an Integrated Services Network" 4TH INFORMS TELECOMMUNICATIONS CONFERENCE, [Online] 8. - 11. März 1998, Seiten 1-8, XP002175494 Florida, USA Gefunden im Internet: <URL:http://citeseer.nj.nec.com/cache/pape rs2/cs/15622/ftp:zSzzSzftp.tik.ee.ethz.chz SzpubzSzpeoplezSzstillerzSzpaperzSzinforms 98.pdf/fankhauser98reservationbased.pdf> [gefunden am 2001-08-22]

## Beschreibung

Die Erfindung betrifft ein Verfahren zur präventiven und oder aktuellen Anzeige von Übertragungskosten bei der Datenübertragung von Internet- und Onlinedaten von einem Dienste-/Informationsanbieter zu einem Teilnehmer, nach dem Oberbegriff des Patentanspruchs 1.

Die prinzipiellen Anwendungsmöglichkeiten für den Internetbetrieb mit den dazugehörigen Protokollstrukturen sind hinreichend bekannt. Demnach bestehen die häufigsten Anwendungen im Ansehen von Internetseiten (das sog. Browsen), die beispielsweise in Hypertext Markup Language HTML verfaßt sind und mittels Hypertext Transfer Protocol HTTP über das auf TCP/IP als Transport-Protocol basierende Internet in das Benutzergerät, beispielsweise ein Personal Computer PC, geladen werden. Dies dürfte die häufigste Anwendung sein. Die teilnehmerseitige Softwarevoraussetzung zum Internetbetrieb ist in der Regel das Vorhandensein eines sog. Browsers.

Daneben besteht als weiterer Schwerpunkt die Möglichkeit zur Übertragung umfangreicher Dateien mit beliebigem Inhalt. Diese Daten werden beispielsweise mittels File Transfer Protocol FTP übertragen, wobei eine häufige Anwendung beispielsweise im sog. Download neuer Software-Releases für den PC-Bereich liegt. Hier können mitunter sehr lange Übertragungszeiten entstehen, wenn es sich um umfangreiche Daten in Kombination mit langsamen Internetanschlüssen handelt.

Ein weiterer Schwerpunkt ist die Übertragung von elektronischer Post, sog. E-Mails, beispielsweise mittels Simple Mail Transfer Protocol SMTP wobei es sich hierbei vorzugsweise um recht geringe Datenmengen handelt, die jedoch mit Anlagen ergänzt werden können. Diese Anlagen sind dann häufig Dateien mit Texten, Daten oder Bildern, wobei es sich hier wiederum um umfangreiche Datenbestände handeln kann.

Die übliche Verfahrensweise, die zumindest in der Bundesrepublik Deutschland für den Internetzugang sowie für den Onlinezugang eingeführt ist, besteht darin, daß der Teilnehmer über ein Telekommunikationsnetz, beispielsweise das ISDN-Netz, mit seinem PC angeschlossen ist. Hiermit stellt er eine Wählverbindung zum betreffenden Internet Access Provider (IAP) her. Danach nutzt er entweder das Angebot des IAP, der ggf. eigene Dienstleistungen, wie Wettervorhersage, Diskussionsforen, Warenangebote in Kooperation mit Partnerfirmen etc. zur Verfügung stellt (IAP ist gleichzeitig Online- oder ISP), oder er nutzt den IAP als Übergang zu den weltweit am Internet angeschlossenen Internet Service Providern ISP. Diese Kommunikation kommt in der Regel jedoch nur dann zustande, wenn der Kunde sowohl ein Vertragsverhältnis mit einem Telekommunikationsunternehmen (Telco) als IAP-Zugang sowie ein zusätzliches Vertragsverhältnis mit einem IAP hat, der gemäß o. g. Beispiel selbst ISP sein kann.

Die Struktur der Übertragungskosten ist entsprechend kompliziert. Sie setzt sich in der Regel aus monatlichen Grundbeträgen für beide Provider (Telco und IAP) sowie aus verbindungsspezifischen laufenden Kosten für die jeweilige Sitzung (Session) zusammen. Hinzu kommen zusätzliche Kosten für die etwaige Inanspruchnahme von ISP-Dienstleistungen, die über getrennte Rechnung, Kreditkartenverrechnung oder in einigen Fällen, wie beispielsweise bei T-Online, mittels besonderer Vertragsverhältnisse zwischen ISP und Lieferant, über die Telefonrechnung erfaßt werden.

Das mit dieser Verfahrensweise verbundene Problem besteht insbesondere darin, daß der Kunde bis zum Eintreffen der monatlichen nachträglichen Telefonrechnung keinerlei Ahnung hat, welche Kosten er mit seinem Internet-Zugriff verursacht. Der einzige Anhaltspunkt, den er derzeit besitzt ist die optionale Angabe der Dateigröße, die beim FTP-Downloadverfahren von vielen ISP angezeigt wird. Mit dieser Information kann der Kunde beispielsweise die Übertragungskosten seiner Telefongesellschaft sowie die Session-Kosten seines IAP selbst ausrechnen, bevor er die Daten als Download anfordert.

Dieser Prozeß ist jedoch nicht ganz trivial. Zunächst muß der Kunde die Datenübertragungsgeschwindigkeit seiner Telefonleitung und seines Terminaladapters oder seines Modem sowie ungefähr den Protokolloverhead der Internet- und Anwendungsprotokolle kennen. Dann kalkuliert er die erforderliche Übertragungszeit und hiernach, unter Beachtung der jeweiligen komplexen Tarifstrukturen, die damit verbundenen Telco- und IAP-Kosten.

Bei dieser Verfahrensweise kommt wenig Freude auf, zumal die Übertragungsgeschwindigkeit aus Gründen der Netz- oder Serverüberlastung an beliebiger Stelle in der kompletten Verbindung sowie bei schlechter Telefonleitung mit häufigen automatischen Wiederholungen zusätzliche Verzögerungen erfahren kann.

Sowohl Telco, als auch IAP berechnen bei den derzeitigen leitungsvermittelten Netzen die zeitliche Dauer einer Session, unabhängig davon, wieviel Daten in dieser Zeit übertragen werden und wie lange der geneigte Kunde für seine etwaige Kalkulation der Kosten benötigt.

Daran würde auch eine Telco-seitige Volumenbepreisung anstelle einer Zeitbepreisung im Prinzip nichts ändern, da diese Strecke nur einen Teil der Übertragung darstellt und der entfernte ISP bei seinem für den weltweiten Zugang erstellten Informationsangebot nicht auf spezifische Telco-Belange einzelner Kunden eingehen kann und damit voraussichtlich auch weiterhin, falls überhaupt, nur die Datenmenge und auch nur bei FTP-Übertragung anzeigt.

Es ist daher ein Verbesserung der Situation durch die Einführung eines geeignetes Verfahrens erforderlich.

Der Aufsatz von G. Frankauser et al."Reservation-based Charging in an Integrated Services Network", 4th INFORMS Telecommunications Conference, Boca Raton, Florida, 8.-11. März 1998, Seiten 1-8, XP-002175494, offenbart ein Verfahren zur Reservierung und Abrechnung von Übertragungskapazitäten in einem Integrated Services Netzwerk. Informationen zur Reservierung von Kapazitäten und Preisinformationen können zwischen einer Daten abfragenden Einrichtung und einer Daten bereitstellenden Einrichtung ausgetauscht und verhandelt werden.

Die Veröffentlichung WO 97 22936 A1 offenbart ein Verfahren zum Überwachen einer Kommunikationsverbindung zwischen einem Server und einem Terminal. Es können die Verbindungszeit, die übertragene Datenmenge oder die Kosten überwacht werden, wobei der Benutzer eine Warnung erhält, falls ein diesen Größen zugeordneter Schwellwert überschritten wird.

Der vorliegenden Erfindung liegt die Aufgabe zugrunde, ein Verfahren vorzuschlagen, auf dessen Basis der Internet- oder Online-Teilnehmer aktuell und/oder präventiv vor einer anstehenden Übertragung zumindest großer Datenmengen, unabhängig vom verwendeten Übertragungsverfahren mit einer Information der Übertragungskosten versorgt werden kann.

Gelöst wird diese Aufgabe durch die kennzeichnenden Merkmale des Patentanspruchs 1.

Wesentliches Merkmal der Erfindung ist, daß vor einer bevorstehenden Datenübertragung ein zusätzliches Protokollelement (Preiselement) seitens des Dienste-/Informationsanbieters zum Teilnehmer (Empfänger) übertragen wird, welches eine Angabe des anstehenden Datenvolumens enthält, wobei das Protokollelement als solches von den an der Übertragung beteiligten Transitknoten und/oder Telekommunikationsnetzen erkannt und bedarfsweise um einen entsprechenden eigenen Teilkostenanteil ergänzt wird, und das Protokollelement letztendlich im Endgerät des Empfängers ausgewertet und eine Summenanzeige der bevorstehenden Übertragungskosten zur Anzeige gebracht wird.

Erfindungsgemäß wird dadurch der Vorteil erreicht, daß der Teilnehmer jederzeit eine Kontrolle über die angefallenen und noch anfallenden Übertragungskosten hat, und zwar über die tatsächlichen Gesamtkosten, die bei einer Übertragung anfallen.

Vorteilhaft kann das Protokollelement zusätzliche preisrelevante Kriterien seitens des Dienste-/Informationsanbieters enthalten, wie beispielsweise Quality of Service, Übertragungspriorität, Routingvorgaben, Preisgruppe, Vertragshinweise, Sicherheitsstufen, Absenderangabe etc.

Die endgeräteseitige Auswertung der im Protokollelement enthaltenen Kostendaten ist auf einfache Weise möglich. In einer bevorzugen Anwendung kann dies durch besondere Zusätze in der verwendeten Browsersoftware erfolgen, die das Protokollelement als solches erkennt, die entsprechenden Berechnungen durchführt und das Ergebnis zur Anzeige bringt.

Eine Weiterbildung der Erfindung sieht vor, daß die Browsersoftware ein zusätzliches Menue (ME) mit alternativen Menuepunkten zur Anzeige bringt, anhand derer der Teilnehmer die Übertragung der Software einleiten oder alternativ ablehnen kann. Dies kann durch entsprechende Informationsfelder in einer vom Dienste- bzw. Informationsanbieter übertragenen und endgeräteseitig dargestellten Angebotsseite erreicht werden. Ferner kann das Menue optional weitere Menuepunkte bieten, die endgeräteseitig anderweitige Aktivitäten initialisieren, wie beispielsweise eine spätere automatische Verbindungsaufnahme zum Diensteanbieter mit Einleitung der betreffenden Datenübertragung zu einem kostenmäßig günstigeren Zeitpunkt.

Eine andere Weiterbildung sieht die Einführung eines besonderen Protokollelements vor, welches vor jedweder Datenübertragung, also beispielsweise auch einer HTML-Seite, an das Endgerät übermittelt wird und dem Anwender somit die Wahl ermöglicht, ob er diese Daten empfangen möchte oder nicht. Diese Maßnahme dient insbesondere als Schutzmechanismus für schnelle anwenderseitige Internetzugänge, wo beispielsweise umfangreiche mit Bildelementen erweiterte HTML-Seiten mit hohen Kosten zugestellt werden, noch ehe der Anwender reagieren und die Datenübertragung gezielt abbrechen kann.

In diesem Zusammenhang ist vorgesehen, daß in Kombination mit einem Standard Protokollelement ein anwenderindividuelles Daten- oder Kostenlimit anwenderseitig programmierbar ist, unterhalb dessen eine automatische Zustellung von Daten erfolgt, indem das anwenderseitige Endgerät alle Übertragungsanforderungen automatisch bestätigt.

In einer alternativen Ausführungsart ist vorgesehen, daß ein vom Teilnehmer gesetztes Daten- oder Kostenlimit automatisch zum Dienste-/Informationsanbieter übertragen wird, wonach der Dienste-/Informationsanbieter seinerseits automatisch bei allen Datenzustellungen oberhalb dieser Grenze eine Bestätigung/Ablehnung der bevorstehenden Übertragung beim Teilnehmer anfordert.

Vorteilhaft kann ferner ein besonderes Protokollelement für alle aktuellen Datenübertragungen eingeführt und bei jeder Datenübertragung mitgesandt werden, wodurch insbesondere bei volumentarifierten Übertragungsnetzen eine eindeutige aktuelle Kostenübersicht ermöglicht wird.

Die Erfindung wird nachfolgend unter Verwendung von Zeichnungsfiguren, die hier lediglich eine mögliche Ausführungsart am Beispiel einer Internet-Übertragung und einem Personal Computer (PC) als Endgerät beschreiben, erläutert, wobei sich anhand der Zeichnungsfiguren weitere Merkmale, Anwendungsgebiete und Vorteile der Erfindung ergeben. Es zeigen:
- Figur 1:: Darstellung einer typischen Internetverbindung;
- Figur 2:: Darstellung einer Intemetverbindung mit erfindungsgemäßer Erweiterung zur präventiven Kostenanzeige.

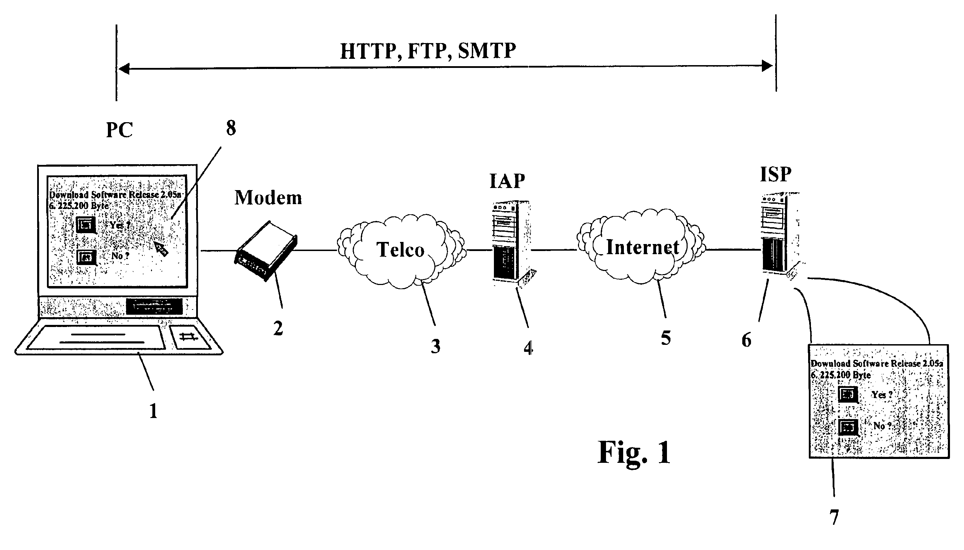

Figur 1 zeigt schematisch eine Internetverbindung und die daran beteiligen Instanzen. Ein Teilnehmer mit beispielsweise einem PC als Endgerät 1 ist mittels Modem 2 an ein Telekommunikationsnetz 3 angeschlossen. Hier besteht der Übergang zum Internet Access Provider 4, der die Verbindung zum weltweiten Internet 5 herstellt. In diesem Beispiel kommuniziert der Teilnehmer mit einem entfernten Diensteanbieter 6 (ISP: Internet Service Provider), der ein bestimmtes Angebot, beispielsweise eine Internetseite 7, bietet und zum Endgerät 1 überträgt, wo diese Seite auf der Anzeige 8 dargestellt wird. In Realität bietet ein Diensteanbieter 6 oft nicht direkt alle Angebote, sondern stellt vergleichbar der Strecke 1-3 eine Verbindung zu sog. Hostrechnern fremder Unternehmen her, die ihrerseits den Diensteanbieter als Internet Access Provider benutzen. Dieser Umstand ist in der vorliegenden Betrachtungsweise jedoch nicht ausschlaggebend und wurde zur Vereinfachung daher nicht dargestellt.

Die Übertragung der Inhalte, hier die Seite 7, erfolgt mittels Ende zu Ende-Protokoll, so daß der Inhalt für die Transitvermittlungsknoten (Router) nicht einsehbar ist. Daher ist eine netzseitige Unterstützung einer Kostenanzeige prinzipiell nicht möglich.

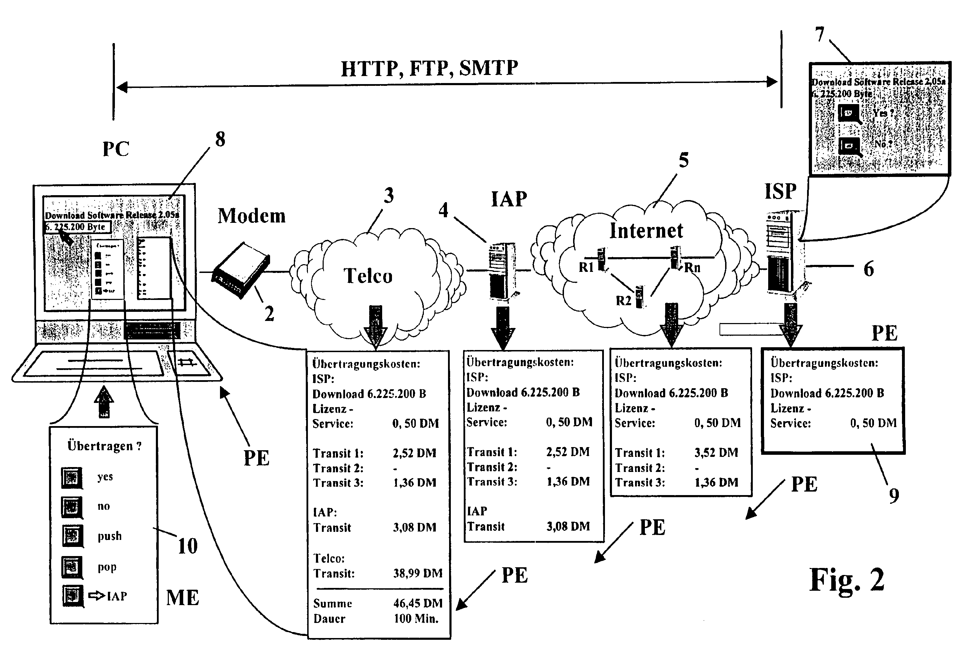

Die vorliegende Erfindung geht daher einen anderen Weg. Es wird gemäß Figur 2 pro Übertragungsangebot ein zusätzliches Protokollelement 9 vom Diensteanbieter 6 übermittelt, welches die an der Übertragung beteiligten Transitknoten (Instanzen bzw. Netzelemente) 5, 4 und 3 erkennen können. Dieses Protokollelement 9 enthält kennzeichnende Merkmale der zu übertragenden Daten, wie Angaben über die Größe der zu übertragenden Datenmenge, evtl. anfallender Zusatzkosten und andere Merkmale wie z.B. Quality of Service, Übertragungspriorität, Absenderkennung, Preiskategorien, Routingvorgaben etc.

Alle an der Übertragung beteiligten Transitknoten 5, 4 und 3 erkennen das Protokollelement 9 und fügen nach entsprechender Berechnung bedarfsweise ihre eigenen anfallenden Übertragungskosten zum Protokollelement 9 hinzu, wodurch dieses stetig erweitert wird und verschicken das Protokollelement 9 zum nächsten Knoten. Auf diese Weise sammelt das Protokollelement alle relevanten Teilkosten der anstehenden Übertragung auf seiner Reise bis zum Endgerät 1 des Teilnehmers ein. Im teilnehmerseitigen Endgerät 1 erkennt der installierte Internet-Browser das Protokollelement 9 und bringt dies zur Anzeige 8, wobei bedarfsweise eine Nachbehandlung der Daten, z.B. eine Summierung der Teilkosten zur besseren Anzeige, vorgenommen wird.

Die Preisinformation wird dabei am Bildschirm des Endgeräts 1 durch Selektieren und Aktivieren eines entsprechenden Feldes (pull down-, oder pop up- Menue, oder separates Anzeigefenster) oder alternativ unmittelbar angezeigt.

Die angezeigte Bildschirmseite entspricht im letzten Fall mit dieser Verfahrensweise nicht mehr der originären Seite 8, sondern ist in den Fällen, wo die erfindungsgemäße Verfahrensweise im Endgerät 1 anteilig enthalten ist, bei optionaler Aktivierung durch den Benutzer, um die Anzeige der Daten des Protokollelements 9 erweitert.

Optional können weitere Menueelement 10 (ME) zur Anzeige kommen, welche unterschiedliche Übertragungsoptionen, wie die Einleitung der unmittelbaren Übertragung, den Abbruch der Übertragung, eine spätere kostengünstigere automatische Übertragung, beispielsweise im POP-Betrieb (Endgerät 1 leitet automatisch die Verbindung ein) oder im PUSH-Betrieb (Diensteanbieter 6 leitet automatisch die Verbindung ein) oder beispielsweise eine Zwischenlösung mit sofortiger Übertragung zum Diensteanbieter 6 mit temporärer Zwischspeicherung und späterer Übertragung über das Telekommunikationsnetz 3 aktivieren.

Weiterhin ist die Einführung eines Standard-Protokollelements für alle anstehenden Datenübertragungen, auch beispielsweise HTML-Pages optional sinnvoll, was insbesondere bei schnellen Internetzugängen, wie beispielsweise 2 Mbps-Anschlüssen vor der sinnlosen Zustellung umfangreich bebilderter Seiten schützt, wobei gerade hier hohe Kosten durch die hohe verfügbare Übertragungsbandbreite dadurch verursacht werden, daß der Anwender eine sinnlose Übertragung mit großem Datenumfang nicht mehr rechtzeitig abbrechen kann, bevor sie durchgeführt wurde.

Ein individuell anwenderseitig programmierbares Übertragungslimit ermöglicht die automatische Zustellung aller darunter liegenden Datenmengen und führt ab der vorgegebenen Grenze zur erforderlichen Quittierung vor der Datenübertragung.

Optional ist die Einführung eines zusätzlichen Standard-Protokollelements für alle aktuellen Datenübertragungen sinnvoll, wodurch insbesondere bei volumenbasierender Abrechnung im Telekommunikationsnetz eine eindeutige Zuordnung der laufenden Kosten zu allen übertragenen Daten gegeben ist.

## Patentansprüche

1. Verfahren zur präventiven und oder aktuellen Anzeige von Übertragungskosten bei der Datenübertragung von Internet- und Onlinedaten von einem Dienste/lnformationsanbieter zu einem Teilnehmer, **gekennzeichnet dadurch, daß** vor einer bevorstehenden Datenübertragung ein zusätzliches Protokollelement (9) seitens des Dienste-/Informationsanbieters (6) zum Teilnehmerendgerät (1) übertragen wird, welches eine Angabe des anstehenden Datenvolumens enthält, wobei das Protokollelement (9) als solches von an der Übertragung beteiligten Transitknoten und/oder Telekommunikationsnetzen (3,4,5) erkannt und bedarfsweise um einen entsprechenden eigenen Teilkostenanteil ergänzt wird, und das Protokollelement (9) letztendlich im Endgerät (1) des Teilnehmers ausgewertet und eine Summenanzeige der bevorstehenden Übertragungskosten zur Anzeige gebracht wird

2. Verfahren gemäß Anspruch 1, **gekennzeichnet dadurch, daß** das Protokollelement (9) zusätzliche preisrelevante Kriterien, wie Quality of Service, Übertagungspriorität, Routingvorgaben, Preisgruppe, Vertragshinweise, Sicherheitsstufen, Absenderangabe etc. enthält.

3. Verfahren gemäß Anspruch 1 oder 2, **gekennzeichnet dadurch, daß** die endgeräteseitige Auswertung durch besondere Zusätze in der im Endgerät (1) verwendeten Browsersoftware erfolgt, wodurch das Protokollelement (9) als solches erkannt wird, die entsprechenden Berechnungen durchgeführt werden und das Ergebnis zur Anzeige gebracht wird.

4. Verfahren gemäß Anspruch 3, **gekennzeichnet dadurch, daß** die Browsersoftware ein zusätzliches Menue (10) mit alternativen Menuepunkten am Endgerät zur Anzeige bringt, anhand derer der Teilnehmer die Übertragung der Software einleiten oder alternativ ablehnen kann, wobei entsprechende Informationsfelder in einer vom Dienste-/Informationsanbieter (6) übertragenen und endgeräteseitig dargestellten Angebotsseite stehen.

5. Verfahren gemäß Anspruch 4, **gekennzeichnet dadurch, daß** das Menue (10) weitere Menuepunkte umfasst, die endgeräteseitig anderweitige Aktivitäten initialisieren.

6. Verfahren gemäß einem der Ansprüche 1 bis 5, **gekennzeichnet dadurch, daß** ein besonderes Protokollelement (9) eingeführt wird, welches vor jedweder Datenübertragung übermittelt wird und dem Teilnehmer somit die Wahl ermöglicht, ob er diese Daten empfangen möchte oder nicht.

7. Verfahren gemäß einem der Ansprüche 1 bis 6, **gekennzeichnet dadurch, daß** in Kombination mit einem Standard Protokollelement (9) ein anwenderindividuelles Daten- oder Kostenlimit anwenderseitig programmierbar ist, unterhalb dessen eine automatische Zustellung von Daten erfolgt, indem das anwenderseitige Endgerät (1) alle Übertragungsanforderungen automatisch bestätigt.

8. Verfahren gemäß einem der Ansprüche 1 bis 6, **gekennzeichnet dadurch, daß** ein vom Teilnehmer gesetztes Daten- oder Kostenlimit automatisch zum Dienste-/Informationsanbieter (6) übertragen wird, wonach der Dienste/lnformationsanbieter (6) seinerseits automatisch bei allen Datenzustellungen oberhalb dieser Grenze eine Bestätigung/Ablehnung der bevorstehenden Übertragung beim Teilnehmer anfordert.

9. Verfahren gemäß einem der Ansprüche 1 bis 8, **gekennzeichnet dadurch, daß** ein besonderes Protokollelement (9) für alle aktuellen Datenübertragungen eingeführt und bei jeder Datenübertragung mitgesandt wird, wodurch insbesondere bei volumentarifierten Übertragungsnetzen eine eindeutige aktuelle Kostenübersicht ermöglicht wird.

## Claims

1. Method for the preventive and/or up-to-date display of transmission costs in the data transmission of internet and online data from a service/information provider to a subscriber, **characterised in that**, before an impending data transmission, an additional protocol element (9) which contains an indication of the data volume pending is transmitted by the service/information provider (6) to the subscriber terminal (1), the protocol element (9) being recognised as such by transit nodes and/or telecommunications networks (3, 4, 5) involved in the transmission and if necessary supplemented by a corresponding share in costs of their own, and the protocol element (9) finally being evaluated in the terminal (1) of the subscriber and a display of the total transmission costs impending being displayed.

2. Method according to claim 1, **characterised in that** the protocol element (9) contains additional criteria relevant to the price such as quality of service, transmission priority, routing details, price group, contract references, security levels, sender details, etc.

3. Method according to claim 1 or 2, **characterised in that** evaluation at the terminal is effected by special add-ons in the browser software used in the terminal (1), as a result of which the protocol element (9) is recognised as such, the corresponding calculations are carried out and the result is displayed.

4. Method according to claim 3, **characterised in that** the browser software displays an additional menu (10) with alternative menu items at the terminal, with the aid of which the subscriber can initiate transmission of the software or alternatively reject it, corresponding information fields being on a supply page transmitted by the service/information provider (6) and displayed on the terminal.

5. Method according to claim 4, **characterised in that** the menu (10) includes further menu items which initialise other activities at the terminal.

6. Method according to one of claims 1 to 5, **characterised in that** a special protocol element (9) is introduced, which is transmitted before any data transmission and so allows the subscriber to choose whether he would like to receive these data or not.

7. Method according to one of claims 1 to 6, **characterised in that** in combination with a standard protocol element (9) a data or cost limit individual to the user is programmable by the user, below which automatic delivery of data is effected by the user's terminal (1) automatically confirming all transmission requirements.

8. Method according to one of claims 1 to 6, **characterised in that** a data or cost limit set by the subscriber is automatically transmitted to the service/information provider (6), whereupon the service/information provider (6) for its part automatically requests confirmation/rejection of the impending transmission from the subscriber for all data deliveries above this limit.

9. Method according to one of claims 1 to 8, **characterised in that** a special protocol element (9) is introduced for all current data transmissions and sent with each data transmission, enabling a clear and up-to-date overview of costs particularly in the case of transmission networks with tariffs according to volume.

## Revendications

1. Procédé d'indication préventive et/ou instantanée de coûts de transmission lors de la transmission de données Internet et en ligne d'un fournisseur de services/ d'informations vers un abonné,
**caractérisé en ce qu'**avant une transmission imminente de données, un élément de protocole supplémentaire (9) est transmis, du côté du fournisseur de services/d'informations (6), au terminal d'abonné (1), lequel élément de protocole (9) contient une indication du volume de données existant, étant précisé que l'élément de protocole (9) est reconnu en tant que tel par des noeuds de transit et/ou des réseaux de télécommunication (3, 4, 5) qui participent à la transmission et est complété au besoin avec une part de coûts propre correspondante, que ledit élément de protocole (9) est finalement analysé dans le terminal (1) de l'abonné et qu'une indication totale des coûts de transmission imminents s'affiche.

2. Procédé selon la revendication 1, **caractérisé en ce que** l'élément de protocole (9) contient des critères de prix supplémentaires tels que la qualité du service, la priorité de transmission, des routages prédéfinis, un prix de groupe, des précisions de contrat, des degrés de sécurité, une indication d'expéditeur, etc.

3. Procédé selon la revendication 1 ou 2, **caractérisé en ce que** l'analyse, côté terminal, se fait grâce à des ajouts spéciaux dans le logiciel de navigateur utilisé dans le terminal (1), moyennant quoi l'élément de protocole (9) est reconnu comme tel, les calculs correspondants sont effectués et le résultat s'affiche.

4. Procédé selon la revendication 3, **caractérisé en ce que** le logiciel de navigateur affiche sur le terminal un menu supplémentaire (10) avec un choix de rubriques de menu grâce auquel l'abonné peut, au choix, déclencher ou refuser la transmission du logiciel, des champs d'informations correspondants se trouvant dans une page d'offres transmise par le fournisseur de services/d'informations (6) et visualisée côté terminal.

5. Procédé selon la revendication 4, **caractérisé en ce que** le menu (10) comprend d'autres rubriques qui lancent, côté terminal, d'autres activités.

6. Procédé selon l'une des revendications 1 à 5, **caractérisé en ce qu'**un élément de protocole spécial (9) est lancé, qui est transmis avant chaque transmission de données et qui permet ainsi à l'abonné de choisir de recevoir ou de ne pas recevoir ces données.

7. Procédé selon l'une des revendications 1 à 6, **caractérisé en ce qu'**en combinaison avec un élément de protocole (9) standard, une limite de données ou de coûts individuelle pour chaque utilisateur est programmable côté utilisateur, au-dessous de laquelle les données sont communiquées automatiquement, grâce au fait que le terminal prévu côté utilisateur (1) confirme automatiquement toutes les exigences de transmission.

8. Procédé selon l'une des revendications 1 à 6, **caractérisé en ce qu'**une limite de données ou de coûts fixée par l'abonné est transmise automatiquement au fournisseur de services/d'informations (6), après quoi le fournisseur de services/d'informations (6) demande lui-même automatiquement à l'abonné, pour toutes les communications de données supérieures à cette limite, une confirmation/un refus de la transmission en préparation.

9. Procédé selon l'une des revendications 1 à 8, **caractérisé en ce qu'**un élément de protocole spécial (9) est introduit pour toutes les transmissions de données instantanées et accompagne chaque transmission de données, ce qui permet, en particulier pour les réseaux de transmission à tarification au volume, un aperçu instantané clair des coûts.
